# EUROPÄISCHE PATENTSCHRIFT

(11) **EP 0 539 893 B1**
(45) Veröffentlichungstag und Bekanntmachung des Hinweises auf die Patenterteilung: **06.03.1996**
(21) Anmeldenummer: 92118245.7
(22) Anmeldetag: 24.10.1992
(51) Int. Cl.: C01B 7/19

(54) **Herstellung von hochreinem Fluorwasserstoff**
Production of highly pure hydrogen fluoride
Production de fluorure d'hydrogène de haute pureté

(30) Priorität: 31.10.1991 DE 4135918
(43) Veröffentlichungstag der Anmeldung: 05.05.1993
(73) Patentinhaber: Solvay Fluor und Derivate GmbH, D-30173 Hannover (DE)
(72) Erfinder: Seseke-Koyro, Ulrich, W-3502 Vellmar (DE); Grossmann, Andreas, W-3163 Sehnde 2 (DE); Rudolph, Werner, W-3000 Hannover 71 (DE)
(74) Vertreter: Lauer, Dieter, Dr.

(56) Entgegenhaltungen:
- EP-A- 0 160 737
- US-A- 4 668 497
- PATENT ABSTRACTS OF JAPAN vol. 010, no. 350 (C-387)26. November 1986& JP-A-61 151 002
- DATABASE WPIL Week 8634, Derwent Publications Ltd., London, GB; AN 86-221201/34 & JP-A-61 151 023
- JP-A-60115538 (Zusammenfassung)
- Gmelins Handbuch der Anorganischen Chemie, Band 17 (1952),Seite 366

## Beschreibung

Die Erfindung bezieht sich auf ein Verfahren zur Herstellung von hochreinem Fluorwasserstoff.

Fluorwasserstoff wird in der Technik in erheblichem Umfang benötigt. Beispielsweise kann man Fluorwasserstoff als solchen oder in Form von Flußsäure als Ätzmittel verwenden. Weiterhin verwendet man Fluorwasserstoff oder Flußsäure zur Herstellung von anorganischen oder organischen Fluor enthaltenden Verbindungen.

In einigen Anwendungsbereichen, insbesondere der Elektronik und Optik, wird gereinigter Fluorwasserstoff benötigt. Technischer Fluorwasserstoff enthält nämlich gewöhnlich geringe Mengen Verunreinigungen wie Wasser, Arsen, sowie gegebenenfalls noch Borverbindungen, Phosphorverbindungen, Schwefelverbindungen und Kohlenstoffverbindungen. Derartige Verunreinigungen müssen abgetrennt werden.

Die US-A-4,668,497 offenbart ein Verfahren zur Herstellung von hochreinem Fluorwasserstoff. Dabei wird Fluorwasserstoff, insbesondere zur Abtrennung von Arsen-Verbindungen, aber auch von Bor-, Silicium-, Phosphor-, Schwefel- und Chlorverbindungen, mit elementarem Fluor behandelt. Anschließend wird die erhaltene Mischung destilliert.

Die EP-A-0 160 737 offenbart ebenfalls ein Verfahren zur Reinigung von Fluorwasserstoff mit dem Ziel der Abtrennung von Arsen-Verunreinigungen. Dabei wird der zu reinigende Fluorwasserstoff mit elementarem Chlor und wasserfreiem Chlorwasserstoff, einem Fluoridsalz oder beidem behandelt. Der gereinigte Fluorwasserstoff wird dann von den nichtflüchtigen Arsen-Verbindungen abgetrennt, vorzugsweise durch Destillation.

Aufgabe der Erfindung ist es, ein effektives und einfach durchzuführendes Verfahren zur Herstellung von hochreinem Fluorwasserstoff anzugeben. Diese Aufgabe wird durch das erfindungsgemäße Verfahren gelöst.

Das erfindungsgemäße Verfahren zur Herstellung von hochreinem Fluorwasserstoff aus Fluorwasserstoff unter Kontaktierung des Fluorwasserstoffs mit elementarem Fluor ist dadurch gekennzeichnet, daß man das Kontaktieren in Anwesenheit eines Metallfluorides durchführt. Der gereinigte Fluorwasserstoff kann dann durch Destillation gewonnen werden. Man kann nach dem erfindungsgemäßen Verfahren von mehr oder weniger reinem Fluorwasserstoff ausgehen. Zweckmäßig wendet man es zur Herstellung von hochreinem Fluorwasserstoff aus Fluorwasserstoff einer Reinheit von mindestens 95 % an.

Der Begriff "hochreiner Fluorwasserstoff" bedeutet vorzugsweise Fluorwasserstoff mit weniger als jeweils 1 ppm an nichtmetallischen Verunreinigungen, metallischen Verunreinigungen und Wasser. Bevorzugt enthält der hochreine Fluorwasserstoff weniger als 10 ppb, insbesondere weniger als 5 ppb an metallischen Verunreinigungen, und ganz besonders bevorzugt weniger als 1 ppb Arsen; der Wassergehalt liegt unter der Nachweisgrenze der Karl-Fischer-Methode.

Im Prinzip kann man beliebige Metallfluoride beispielsweise Fluoride von Metallen der 1., 2., 3. oder 4. Hauptgruppe oder Fluoride von Nebengruppenmetallen, verwenden, vorausgesetzt, daß diese mit einer der abzutrennenden Verunreinigungen ein schwerflüchtiges Reaktionsprodukt bilden. Zweckmäßig verwendet man jedoch Fluoride von Metallen der ersten oder zweiten Hauptgruppe, insbesondere Fluoride von Alkalimetallen, beispielsweise Lithiumfluorid, Natriumfluorid, Kaliumfluorid oder deren Fluorwasserstoff-Addukte, z.B. NaHF₂ oder KHF₂. Im Prinzip kann man auch von Metallsalzen ausgehen, die mit Fluorwasserstoff in situ unter Bildung flüchtiger Reaktionsprodukte oder Wasser zu Metallfluoriden reagieren. Beispielsweise kann man Metallhydroxide, Metalloxide oder Metallcarbonate einsetzen. Vorzugsweise geht man jedoch unmittelbar von Fluoriden aus.

Etwaig im zu reinigenden Fluorwasserstoff enthaltenes Wasser reagiert mit Fluor zu Fluorwasserstoff und Sauerstoff.

Nichtmetalle reagieren zu Nichtmetallfluoriden. Arsen- und Phosphorverbindungen reagieren z.B. mit Fluor im wesentlichen unter Bildung von Arsenpentafluorid bzw. Phosphorpentafluorid. Kohlenstoffverbindungen reagieren im wesentlichen unter Bildung von Kohlenstofftetrafluorid, wenn es sich um Kohlenwasserstoffverbindungen handelt. Halogen enthaltende Kohlenwasserstoffe reagieren zu entsprechenden Halogenfluormethanen. Bei Anwesenheit von Heteroatomen entstehen noch die entsprechenden Heteroatomfluoride.

Zweckmäßig wird das Fluor mindestens in der Menge eingesetzt, die stöchiometrisch zur Umwandlung der Verunreinigungen in abtrennbare Substanzen notwendig ist. Die eingesetzte Fluormenge sollte also mindestens der der hauptsächlichen Verunreinigungen entsprechen, also zur Umwandlung des vorhandenen Wassers in Fluorwasserstoff und Sauerstoff, der Umwandlung vorhandener Arsenverbindungen in Arsenpentafluorid, zur Umwandlung vorhandener Phosphorverbindungen in Phosphorpentafluorid und zur Umwandlung etwaig vorhandener Kohlenstoffverbindungen in Fluormethane ausreichen. Bevorzugt verwendet man das Fluor im Überschuß. Zweckmäßig setzt man das 2- bis 8-fache der stöchiometrisch benötigten Fluormenge oder mehr ein.

Das beim erfindungsgemäßen Reinigungsverfahren gebildete Arsenpentafluorid bzw. Phosphorpentafluorid, meist die Verunreinigungen mit dem größten Anteil, reagieren z.B. mit dem in der Reaktionsmischung anwesenden Fluoridsalz unter Bildung eines Metallhexafluorarsenat- bzw. Metallhexafluorphosphat-Komplexes. Das Metallfluorid wird deshalb zweckmäßig mindestens in der stöchiometrisch zur Überführung des gebildeten Arsenpentafluorids bzw. Phosphorpentafluorids in Metallfluorid-Komplexe benötigte Menge eingesetzt. Vorteilhaft setzt man das 1- bis 20-fache der stöchiometrisch zur Überführung der Nichtmetallfluoride in Nichtmetallfluorid-Komplexe benötigten Menge an Metallfluorid oder auch mehr ein.

Das Kontaktieren des Fluorwasserstoffs mit elementarem Fluor kann bei vermindertem Druck, bei Umgebungsdruck oder bei erhöhtem Druck durchgeführt werden. Beispielsweise kann man es zwischen 0,5 bar und 10 bar und höher durchführen. Vorteilhaft arbeitet man entweder bei Umgebungsdruck oder bei erhöhtem Druck, beispielsweise zwischen Umgebungsdruck und 7 bar.

Die Kontaktierung wird zweckmäßig bei einer Temperatur in der Reaktionsmischung von -20 °C bis 150 °C, vorzugsweise 20 °C bis 100 °C durchgeführt. Bei höherer Temperatur ist das Verfahren natürlich effektiver.

Das elementare Fluor kann in reiner Form oder gemischt mit einem Inertgas eingesetzt werden. Beispielsweise kann man Gemische von Fluor mit Edelgasen oder Stickstoff verwenden. Gemische von Fluor mit Fluorwasserstoff sind ebenfalls brauchbar.

Hochreiner Fluorwasserstoff kann dann durch Destillation aus der Reaktionsmischung gewonnen werden. Der gewonnene hochreine Fluorwasserstoff kann als solcher verwendet werden, beispielsweise als Ätzmittel in der Elektronik und Optik.

Aus dem nach dem erfindungsgemäßen Verfahren erhältlichen hochreinen Fluorwasserstoff kann man auch durch Vermischen mit Wasser eine hochreine Flußsäure herstellen. Je nach Menge des verwendeten Wassers kann man natürlich Flußsäuren beliebiger Konzentration erzeugen.

Weiterhin kann man den nach dem erfindungsgemäßen Verfahren erhältlichen hochreinen Fluorwasserstoff auch zur Herstellung von Fluor enthaltenden Verbindungen verwenden. Beispielsweise kann man anorganische Fluoride oder organische Fluor enthaltende Verbindungen nach an sich bekannten Methoden herstellen.

Das erfindungsgemäße Verfahren weist den Vorteil auf, daß bei seiner Durchführung aus den Verunreinigungen Reaktionsprodukte mit sehr niedrigem Siedepunkt (Sauerstoff, Kohlenstofftetrafluorid), Metallfluorokomplexe mit einem bei der Siedetemperatur von Fluorwasserstoff nicht nachweisbaren Dampfdruck sowie HF entstehen. Diese Reaktionsprodukte lassen sich durch Destillation auf einfache Weise abtrennen.

Die folgenden Beispiele sollen das erfindungsgemäße Verfahren weiter erläutern, ohne es in seinem Umfang einzuschränken.

### Beispiel 1:

Reinigung von Fluorwasserstoff bei Umgebungsdruck.

Als Apparatur wurde eine Einheit verwendet, die aus einem Reaktionsgefäß mit aufgesetztem Rückflußkühler und Destillationsaufsatz bestand. In das Reaktionsgefäß wurden 1.000 g technisches Fluorwasserstoffgas kondensiert. Die Reinheit des Fluorwasserstoffs an HF betrug 99,99 Gew.-%. Der Fluorwasserstoff enthielt als Verunreinigungen 80 ppm Wasser, 20 ppm Schwefel als Sulfat und etwa 500 ppm Arsen. Die Summe der metallischen Verunreinigungen betrug etwa 10 ppm. Zu Testzwecken war das Fluorwasserstoffgas mit 10 ppm n-Pentan dotiert. In das Reaktionsgefäß wurden dann noch 7.500 ppm Lithiumfluorid eingegeben. In das Reaktionsgemisch wurde dann ein Gemisch aus Stickstoff und Fluor (Volumenverhältnis von Stickstoff zu Fluor etwa 9:1) eingeleitet. Die eingeleitete Gesamtmenge an Fluor betrug etwa 0,16 Mol. Die stöchiometrisch benötigte Menge wäre etwa 0,03 Mol gewesen. Nach Beendigung der Einleitung wurde der Fluorwasserstoff destilliert und anschließend analysiert. Der Wassergehalt wurde nach der Methode von Karl-Fischer untersucht, die übrigen Bestandteile mittels ICP (Inductive Coupled Plasma), GF-AAS (Graphite Furnace Atomic Absorption Spektr.) und durch Headspace-Gaschromatographie, gekoppelt mit Massenspektroskopie (GC-MS) untersucht. Der Gehalt an Wasser sowie den anderen Verunreinigungen lag jeweils unterhalb der Nachweisgrenze.

### Beispiel 2:

Reinigung von Fluorwasserstoff mit Fluor unter Druck.

Als Apparatur wurde diesmal ein Druckzylinder mit 3,8 l Rauminhalt verwendet. Dieser Druckzylinder war verschließbar und über eine absperrbare Leitung mit einer Destillationsvorrichtung verbunden.

In den Druckzylinder wurden 2 l technischer Fluorwasserstoff eingefüllt. Dieser Fluorwasserstoff wies die gleiche Zusammensetzung wie der in Beispiel 1 verwendete Fluorwasserstoff auf. In den Druckzylinder wurde dann Lithiumfluorid eingegeben, bis der Gehalt an Lithiumfluorid etwa 15.000 ppm betrug. Der Zylinder wurde anschließend mit elementarem Fluor beaufschlagt, bis der Druck im Zylinder etwa 5,3 bar betrug. Es war dann etwa 0,43 Mol F₂ im Druckzylinder vorhanden; die stöchiometrisch benötigte Menge wäre 0,06 Mol. Der Inhalt des Druckzylinders wurde dann auf etwa 100 °C gebracht und 12 Stunden lang bei dieser Temperatur gehalten. Zur besseren Durchmischung wurde der Druckzylinder mechanisch hin und her bewegt. Der Druckzylinder wurde dann auf Raumtemperatur abgekühlt und leichtflüchtige Bestandteile abgelassen. Anschließend wurde der Inhalt des Druckzylinders destilliert. Das Destillat wurde wiederum analysiert. Der Gehalt an Wasser und Kohlenstoffverbindungen war kleiner als 1 ppm. Auch die übrigen Verunreinigungen waren nur noch in geringsten Spurenkonzentrationen vorhanden. Die Konzentration an Sulfat war beispielsweise kleiner als 0,1 ppm, die Konzentration an Arsen war kleiner als 0,001 ppm und die Konzentration an metallischen Verunreinigungen war kleiner als 0,005 ppm.

## Patentansprüche

1. Verfahren zur Herstellung von hochreinem Fluorwasserstoff aus Fluorwasserstoff unter Kontaktierung des Fluorwasserstoffs mit elementarem Fluor, dadurch gekennzeichnet, daß man die Kontaktierung in Anwesenheit von Metallfluorid durchführt.

2. Verfahren nach Anspruch 1, dadurch gekennzeichnet, daß man als Metallfluorid ein oder mehrere Fluoride von Metallen der ersten oder zweiten Hauptgruppe verwendet.

3. Verfahren nach Anspruch 1 oder 2, dadurch gekennzeichnet, daß man als Fluorid Lithiumfluorid, Natriumfluorid, Kaliumfluorid oder entsprechende Fluorwasserstoff-Addukte verwendet.

4. Verfahren nach einem der vorhergehenden Ansprüche, dadurch gekennzeichnet, daß man das Fluor in der 2- bis 8-fachen Menge der stöchiometrisch zur Umwandlung der Verunreinigungen benötigten Menge einsetzt.

5. Verfahren nach einem der vorhergehenden Ansprüche, dadurch gekennzeichnet, daß man das Fluorid in der 1- bis 20-fachen Menge der stöchiometrisch zur Überführung der Nichtmetallfluoride in Nichtmetallfluorid-Komplexe benötigten Menge einsetzt.

6. Verfahren nach einem der vorhergehenden Ansprüche, dadurch gekennzeichnet, daß man die Kontaktierung von Fluorwasserstoff und elementarem Fluor bei einer Temperatur zwischen -20 °C und 150 °C durchführt.

7. Verfahren nach einem der Ansprüche 1 bis 6, dadurch gekennzeichnet, daß man aus der Reaktionsmischung gewonnenen hochreinen Fluorwasserstoff mit Wasser vermischt, um wasserhaltigen Fluorwasserstoff zu erhalten.

## Claims

1. A process for the preparation of ultra-pure hydrogen fluoride from hydrogen fluoride by bringing the hydrogen fluoride into contact with elemental fluorine, characterised in that the contacting is effected in the presence of metal fluoride.

2. A process according to Claim 1, characterised in that one or more fluorides of metals from the first or second main group is used as metal fluoride.

3. A process according to Claim 1 or 2, characterised in that lithium fluoride, sodium fluoride, potassium fluoride or corresponding hydrogen fluoride adducts is used as fluoride.

4. A process according to one of the preceding claims, characterised in that the fluorine is employed in an amount 2 to 8 times the amount which is required stoichiometrically for converting the impurities.

5. A process according to one of the preceding claims, characterised in that the fluoride is employed in an amount 1 to 20 times the amount required stoichiometrically for converting the non-metal fluorides into non-metal fluoride complexes.

6. A process according to one of the preceding claims, characterised in that hydrogen fluoride and elemental fluorine are brought into contact with each other at a temperature of between -20°C and 150°C.

7. A process according to one of Claims 1 to 6, characterised in that ultra-pure hydrogen fluoride recovered from the reaction mixture is mixed with water in order to obtain hydrous hydrogen fluoride.

## Revendications

1. Procédé de préparation de fluorure d'hydrogène de haute pureté, à partir de fluorure d'hydrogène, avec mise en contact du fluorure d'hydrogène avec du fluor élémentaire, caractérisé en ce que la mise en contact est réalisée en présence d'un fluorure métallique.

2. Procédé selon la revendication 1, caractérisé en ce qu'on utilise comme fluorure métallique un ou plusieurs fluorures de métaux du premier ou du deuxième groupe principal.

3. Procédé selon la revendication 1 ou 2, caractérisé en ce qu'on utilise comme fluorure le fluorure de lithium, le fluorure de sodium, le fluorure de potassium ou des produits d'addition correspondants du fluorure d'hydrogène.

4. Procédé selon l'une des revendications précédentes, caractérisé en ce qu'on utilise le fluor en une quantité 2 à 8 fois supérieure à la quantité nécessaire d'un point de vue stoechiométrique à la conversion des impuretés.

5. Procédé selon l'une des revendications précédentes, caractérisé en ce qu'on utilise le fluorure en une quantité de 1 à 20 fois supérieure à la quantité nécessaire d'un point de vue stoechiométrique pour transformer les fluorures non métalliques en complexes de fluorures non métalliques.

6. Procédé selon l'une des revendications précédentes, caractérisé en ce qu'on procède à la mise en contact du fluorure d'hydrogène et du fluor élémentaire à une température comprise entre -20 et 150°C.

7. Procédé selon l'une des revendications 1 à 6, caractérisé en ce qu'on mélange à de l'eau, pour obtenir un fluorure d'hydrogène contenant de l'eau, le fluorure d'hydrogène de haute pureté obtenu à partir du mélange réactionnel.
